# EUROPÄISCHE PATENTSCHRIFT

(11) **EP 0 996 691 B1**
(45) Veröffentlichungstag und Bekanntmachung des Hinweises auf die Patenterteilung: **21.09.2005**
(21) Anmeldenummer: 98942553.3
(22) Anmeldetag: 14.07.1998
(51) Int. Cl.: C09D 183/14, C09D 185/00, C09D 183/12, C09D 183/08

(54) **BESCHICHTUNGSMATERIAL**
COATING MATERIAL
PRODUIT DE REVETEMENT

(30) Priorität: 15.07.1997 DE 19730245
(43) Veröffentlichungstag der Anmeldung: 03.05.2000
(73) Patentinhaber: W.L. Gore & Associates GmbH, 85640 Putzbrunn (DE)
(72) Erfinder: BÜRGER, Wolfgang, D-81825 München (DE); STEFFL, Rudolf, D-87466 Oy-Mittelberg (DE); KASEMANN, Reiner, D-85625 Glonn (DE)
(74) Vertreter: Kador & Partner
(86) Internationale Anmeldenummer: PCT/EP1998/004376
(87) Internationale Veröffentlichungsnummer: WO 1999/003941

(56) Entgegenhaltungen:
- EP-A- 0 166 363
- EP-A- 0 707 179
- EP-A- 0 738 771
- EP-A- 0 797 111
- US-A- 5 180 845
- US-A- 5 288 889
- US-A- 5 550 184

## Beschreibung

Die Erfindung betrifft ein Beschichtungsmaterial auf Basis von modifizierten Polysilsequioxanen (hoch-vernetzte Materialien z.B. mit der empirischen Formel RSiO_{1,5}), dessen Synthese und die Anwendung des Beschichtungsmaterials zur Beschichtung von Oberflächen, insbesondere poröser Polymere, zur Erzielung von oleophoben Eigenschaften mit hoher Temperaturstabilität. Weiterhin betrifft die Erfindung ein mit diesem Beschichtungsmaterial beschichtetes Material und dessen Verwendungen, sowie ein Be-und Entlüftungselement.

Polymere Oberflächen haben typischerweise hydrophobe aber nicht oleophobe Eigenschaften und sind für Flüssigkeiten mit niedrigen Oberflächenspannungen (Lösungsmittel) benetzbar. Selbst mikroporöses Polytetrafluoroethylen (PTFE) mit bekannt hohen hydrophoben und oleophoben Eigenschaften ist durch Flüssigkeiten mit Oberflächenspannungen < 28 mN/m benetzbar (vgl. EP 0,581,168).

Es sind bereits zahlreiche fluorhaltige Beschichtungszusammensetzungen zur Oleophobierung von polymeren bzw. porösen Oberflächen bekannt, die aber insbesondere bei dem Grad der Oleophobie, der Temperaturstabilität bzw. bei der Oleophobie bei erhöhter Temperatur Raum für Verbesserungen offen lassen.

In EP 0,581,168 (Mitsubishi) werden Beschichtungen auf Basis von fluorierten Alkyl (meth-)acrylaten zur Beschichtung von Polyolefinen (PP, PE) beschrieben.

In EP 0,561,875 wird die Oleophobbeschichtung von mikroporösem PTFE (ePTFE) mit Teflon AF beschrieben.

WO 92/21715 beschreibt die Verwendung von Perfluorpolyethern als ölabweisende Beschichtung für mikroporöse Polymere.

In US-A-5 288 889 werden fluorierte Siliciumalkoxide zur schutzabweisenden Beschichtung von Silikonoberflächen beschrieben.

In der europäische Anmeldung EP-A-0 166 363 werden transparente, wenig reflektierende Beschichtungen beschrieben, die unter anderem Kondensate aus poly- oder perfluorierten Alkoxysilanen enthalten, welche schmutzabweisende Eigenschaften haben.

In der japanischen Anmeldung JP 4-213384 werden Siliziumalkoxide mit Perfluorpolyetherseitenketten zur schmutzabweisenden Beschichtung von Silikonoberflächen beschrieben.

In EP 0 587 667 werden Beschichtungsmaterialien auf Basis von Mischungen von Alkoxysilanen, Alkoxysilanen mit organischen nicht hydrolysierbaren Seitengruppen und Silanen mit perfluorierten Seitengruppen beschrieben, die nach Vernetzung an der Luftoberfläche angereichert perfluorierte Gruppen tragen. R. Kasemann et. al: New J. Chem., 1994, 18, S.1117 beschreibt derartige funktionelle Beschichtungen, über den Sol Gel Prozess hergestellt.

Aus der WO 97/01508 ist lediglich ein Verfahren zur Herstellung eines Gels aus einem anorganischen Oxid bekannt, bei dem mindestens ein fluorierter anorganischer Oxid-Precurser mit fluorierter Säure gemischt wird. Die Zugabe fluorierter Lösungsmittel ist zwingend erforderlich. Diese sind kostenintensiv und umweltrelevant. Offenbart ist weiterhin, daß eine Schicht des derart hergestellten Materials als "Adhesionshilfe" für eine Fluorpolymer-Schicht verwendet wird. Ein möglicher Einsatz der Beschichtung zur Oleophobierung wird nicht beschrieben. Die WO 97/01599 beschreibt eine Zusammensetzung aus einem Fluorpolymer und einem, wie in der WO 97/01508 beschrieben, hergestellten anorganischen Oxid.

Die erfindungsgemäße Aufgabe besteht darin, ein Beschichtungsmaterial bereitzustellen, das hohe Oleophobiewerte aufweist.

Eine weitere Aufgabe ist es, ein Beschichtungsmaterial auf Substrat-Oberflächen, insbesondere porösen Polymeren aufzubringen, wobei das beschichte Substrat hohe Oleophobiewerte aufweist.

Eine nächste Aufgabe besteht darin, ein beschichtetes Substrat mit hoher Oleophobie herzustellen, welches hohe Temperaturstabilität aufweist.

Eine weitere Aufgabe ist es, ein beschichtetes Substrat herzustellen, wobei durch die Beschichtung nur eine geringfügige Änderung der Permeabilität des Substrats entsteht, bzw. im Falle von porösen Substraten die Porosität im wesentlichen nicht beeinträchtigt wird.

Eine nächste Aufgabe ist es, ein derartiges Beschichtungsmaterial herzustellen, ohne umweltrelevante, insbesondere fluorierte Lösungsmittel verwenden zu müssen.

Eine letzte Aufgabe ist es ein Be- und Entlüftungselement zu schaffen, das vielseitig eingesetzt werden kann und den Ein- bzw. Durchtritt von Flüssigkeiten verhindert.

Das erfindungsgemäße Beschichtungsmaterial umfaßt Kondensate mindestens einer Verbindung A der allgemeinen Formel RₐMZ_{b} (a= 0-3; b=1-4; a+b=3, 4), wobei R eine nicht-hydrolisierbare organische Gruppe ist,
und mindestens einer Verbindung B der allgemeinen Formel R'ₓMZ_{y} (x=1-3; y= 1-3; x+y=3, 4) wobei R' eine nicht-hydrolysierbare organische Gruppe ist und mindestens ein R' eine von M durch mindestens zwei Atome getrennte Perfluorpolyetherstruktur enthält,
wobei M ein Element des Periodensystems ausgewählt aus den Hauptgruppen III - V oder aus den Nebengruppen II - IV und Z eine hydrolysierbare organische Gruppe ist, und
mindestens eine Verbindung B
CF₃[OCF(CF₃)CF₂]_{d}(OCF₂)eOCONHCH₂CH₂CH₂Si(OR")₃ ist (d und e ≥ 0, und wobei mindestens ein R nicht gleich mindestens einem R' ist wie in den Patentansprüchen beschrieben.

Erfindungsgemäß kann das Beschichtungsmaterial auf die Oberfläche eines Substrats aufgebracht werden. In einer bevorzugten Ausführungsform ist das Substrat ein poröses Polymer, insbesondere ein textiles Flächengebilde oder ein Fluorpolymer- bzw. Fluorpolymerblend, besonders bevorzugt in mikroporöser Form, wie z.B. expandiertes Polytetrafluorethylen (ePTFE).

Die Erfindung stellt außerdem ein Verfahren zur Herstellung eines Beschichtungsmaterials bereit, wobei A und B gemischt werden.

Die Erfindung stellt weiterhin ein Verfahren zur Beschichtung eines Substrates zur Verfügung, wobei ein erfindungsgemäßes Beschichtungsmaterial auf ein Substrat aufgebracht und ausgehärtet wird. Weiterhin schafft die vorliegende Erfindung ein Be- und Entlüftungselement, das ein beschichtetes Material umfaßt, welches ein Substrat und ein auf mindestens einer Oberfläche des Substrates aufgebrachtes Beschichtungsmaterial aufweist, wobei das Beschichtungsmaterial Kondensate
mindestens einer Verbindung A
und mindestens einer Verbindung B
enthält.

Mit einem "Kondensat" ist ein Oligomer oder Polymer gemeint, das mindestens eine Metall - Sauerstoff - Metallbindung besitzt, die üblicherweise durch Kondensation von zwei an Metallatome gebundenen OH Gruppen entsteht.

Unter einer "nicht-hydrolisierbaren organischen Gruppe" ist eine beliebige organische Gruppe gebunden an ein Metallatom zu verstehen, wobei im Reaktionsmedium keine hydrolytische Spaltung der Bindung zwischen Metall und der organischen Gruppe (z.B. Si-C Bindung) auftritt.

Eine "hydrolisierbare Gruppe" ist eine beliebige Gruppe, gebunden an ein Metallatom M, die durch Reaktion mit Wasser, ggf. katalysiert durch Säuren oder Basen, M-O-H Gruppen bilden kann.

Eine "Perfluorpolyetherstruktur" bedeutet eine Polyfluoroxyalkylen-Gruppe wobei in der Regel poly- oder perfluorierte Gruppen über mindestens eine Sauerstoffbrücke verbunden sind.

Eine "Membrane" ist ein poröser Film, im Sinne dieser Anmeldung.

Mit "porös" wird eine Struktur bezeichnet, die miteinander verbundene Poren oder Hohlräume aufweist, die derart gestaltet sind, daß durchgehende Passagen oder Wege durch das Material gebildet sind.

"Oberfläche" des Substrats bedeutet sowohl die äußere als auch die innere Oberfläche, falls vorhanden. Mit innerer Oberfläche sind die Wände der Poren oder Hohlräume eines porösen Substrats gemeint.

Die Erfinder haben erstmals gefunden, daß durch Hydrolyse und Kondensation einer Mischung mindestens zweier Verbindungen, nämlich mindestens einer Metallverbindung mit hydrolysierbaren Gruppen, und mindestens einer Metallverbindung mit mindestens einer nicht-hydrolysierbaren organischen Gruppe, wobei mindestens eine nicht-hydrolysierbare Gruppe eine Perfluorpolyetherstruktur enthalten muß, Beschichtungsmaterialien zugänglich gemacht werden können, die die erfindungsgemäße Aufgabe lösen.

Derartige Beschichtungen zeichnen sich durch sehr hohe Oleophobie aus. Dabei können Ölwerte der Beschichtung und des beschichteten Substrats von > 3, insbesondere > 5 und vorzugsweise > 7 erzielt werden. Die sehr hohe Oleophobie kann dadurch erklärt werden, daß die an der Schichtoberfläche angereicherten Perfluorpolyetherketten durch den Einfluß der darunterliegenden Matrix, gebildet aus hochvernetzten Polykondensaten, extrem geordnet (z.B. kristallin) vorliegen.

Wichtig ist, daß mindestens zwei der genannten Verbindungen, d.h. jeweils eine Verbindung A und eine Verbindung B vorliegen. Wird nur eine Verbindung gewählt können diese hohen Ölwerte nicht erreicht werden.

Die Ölwerte des beschichteten Substrats sind zudem abhängig von der Oberflächenporosität des Substrats.

Zusätzlich weisen die Beschichtungen auch bei hohen Temperaturen eine hohe Oleophobie auf bzw. sind temperaturbeständig. So bleibt der Ölwert des beschichteten Substrats nach Wärmebehandlung bei 160°C für 12 Stunden, insbesondere bei 200°C für 2h und besonders bevorzugt bei 250°C für 2 Stunden unverändert. Getriebeöl (Automatic Transmission Fluid - ATF Oil, Autran DX II ,BP Hamburg) benetzt auch bei bis zu 200°C für 12h die Struktur nicht. Das bedeutet insbesondere, daß der Kontaktwinkel eines Tropfens Getriebeöl auf der

Beschichtung und anschließender Wärmebehandlung bei 160°C für 12 Stunden ≥ 10° ist.

Bevorzugte Beispiele für das Metallatom M sind Al, B, Ge, Sn, Ti, Zr und besonders bevorzugt ist Si.

Beispiele für hydrolysierbare Gruppen Z in den Edukten (monomere Verbindungen oder auch oligomere bzw. polymere Vorkondensate mit ggf. unterschiedlichen Atomen M) sind Halogene und besonders bevorzugt OR"-Grupppen wobei R" eine organische Gruppe ist, z.B. Alkylgruppen besonders bevorzugt mit 1-5 C-Atomen (Methyl, Ethyl, etc.), carbonylfunktionalisierte Gruppen wie z.B. C=OCH₃ oder C=OCH₂CH₃, Arylverbindungen wie z.B. Phenyl, alkoxyfunktionalisierte Alkane wie Alkylmethoxy- oder Alkylethoxyverbindungen. Insbesondere bevorzugt sind organische Gruppen R" die bei der Hydrolyse Alkohole mit Siedepunkten <200°C, besonders bevorzugt <100°C bilden, da dadurch die Entfernung der flüchtigen Hydrolyseprodukte in einfacher Weise möglich ist. Statt hydrolysierbarer OR" Gruppen können auch andere Gruppen (z.B. Halogen) eingesetzt werden, die durch Hydrolyse MOH-Gruppen bilden. Derartige Gruppen sind allerdings nicht besonders bevorzugt, da die parallel gebildeten Hydrolyseprodukte (Säuren, Salze) in der Regel nicht einfach aus der Schicht entfernt werden können.

Beispiele für nicht hydrolisierbare Gruppen R oder R', wobei an einem Metallatom M auch ein oder mehrere verschiedene R oder R' gebunden sein können, sind die folgenden nicht-fluortragenden Gruppen: Alkenyl (insbesondere C₂-C₄- Alkenyl), Alkinyl (C₂-C₄), Acryl, Methacryl, Aryl (insbesondere C₆-C₁₀) und bevorzugt Alkylgruppen (C₁-C₅, z.B. Methyl, Ethyl, Propyl, Isopropyl).

Es können neben monomeren Verbindungen der allgemeinen Formel RMZ oder R'MZ auch oligomere bzw. polymere Vorkondensate mit ggf. unterschiedlichen Atomen M und Gruppen R oder R' eingesetzt werden.

Beispiele für fluortragende, nicht hydrolisierbare Gruppen R, R' sind die Verbindungen, die eine Perfluopolyetherseitenkette tragen, mit der allgemeinen Formel :

(Rₚ-X-)ₐMR_{mb} Z_{c}; (a+b+c=3,4; a= 1 - 3; b= 0,1,2), wobei Rₘ eine nicht-hydrolisierbare organische Gruppe ist. Besonders bevorzugt ist M = Si und/oder Z=OR".

Rₚ steht für eine Perfluorpolyetherstruktur, z.B. CF₃CF₂CF₂[OCF(CF₃)CF₂]ₓOCF(CF₃)(CF₂CF₂)_{y}- (x und y ≥ 0, bevorzugt x=1-10) oder
CF₃[OCF(CF₃)CF₂]_{d}(OCF₂) ₑ- (d und e ≥ 0, bevorzugt d= 1-10).

Die Perfluorpolyetherstuktur enthält dabei vorzugsweise 6-100 Fluoratome.

X beschreibt eine Gruppe die Rₚ von Si durch mindestens zwei Atome trennt, z.B.
-(CH₂)_{z} (z=2-4), COOCH₂CH(OH)CH₂, COO, SO₂NH, CONH,
COOCH₂CH(OH)(CH₂)_{z} (z=2-4), COO(CH₂)_{z} (z=2-4),
SO₂NH(CH₂)_{z} (z=2-4), CONH-(CH₂)_{z} (z=2-4).

Die Beispiele für hydrolysierbare Gruppen Z und nicht-hydrolysierbare Gruppen Rₘ für Rₚ-Gruppen tragende Komponenten sind identisch mit den oben beschriebenen für RMZ bzw. R'MZ Verbindungen.

Eine bevorzugte Verbindung A ist Si(OR")₄, eine besonders bevorzugte Verbindung A ist RSi(OR")₃, wobei R eine nicht-hydrolisierbare organische Gruppe ist und R" ein C₁-C₅ Alkyl.

Bei der Verbindung B ist R'Si(OR)₃ eine bevorzugte Verbindung, wobei R' eine nicht-hydrolisierbare organische Gruppe ist. Mindentens eine Verbindung B besteht aus
CF₃[OCF(CF₃)CF₂]_{d}(OCF₂)ₑOCONHCH₂CH₂CH₂Si(OR)₃ (d und e ≥ 0, bevorzugt d= 1-10).

Das molare Verhältnis der Gruppen R:R' liegt insbesondere zwischen 0,1:100 und 100:0,1.

Als zusätzliche Komponenten können auch Suspensionen von Metalloxidpartikeln z.B. der Elemente Ti, Zr, Al, Si zugegeben werden. Bevorzugt werden Partikelgrößen von <1µm, besonders bevorzugt < 100nm (z.B. Kieselsole (SiO₂), z.B. der Fa. Bayer) eingesetzt. Über die Oberflächen OH-Gruppen werden derartige Komponenten über Kondensationsreaktionen in das anorganische Netzwerk eingebaut und können die mechanischen Eigenschaften der Schichten verbessern.

Vorzugsweise wird das Beschichtungsmaterial über den Sol-Gel Prozess hergestellt. Der Sol-Gel Prozess wird definiert als ein Verfahren, bei dem man ausgehend von Molekülen, die hydrolisierbare Gruppen tragen, durch Kondensation kolloiddispers gelöste Partikel (Sol) erzeugt. Bei derartigen Solen sind die Kondensationsreaktionen in der Regel noch nicht vollständig abgelaufen. Sole sind flüssige Zwischenstufen, die als Beschichtungsmaterial verwendbar sind. Nach dem Beschichtungsschritt und dem vollständigen Aufbau der durch Kondensation entstehenden Struktur, wobei ggf. auch weitere Vernetzungsmechanismen (z.B. Polymerisation organisch funktioneller Gruppen) verwendet werden können, sind zu diesem Zeitpunkt Poren, die in der Struktur vorliegen, mit Lösungsmitteln gefüllt (Gel). Nach Austreibung des Lösungsmittels (z.B. thermisch, Vakuum) entsteht das Material, das als Beschichtung auf einem Substrat verbleibt.

Zur Herstellung der Beschichtungszusammensetzung werden daher die oben näher beschriebenen Edukte gemischt und hydrolisiert. Die Hydrolyse des Gemisches kann, im einfachsten Falle, bei Umgebungstemperatur und -druck erfolgen, ohne Zugabe von weiteren Zutaten und ohne weitere physikalische Behandlung. Vorzugsweise wird zu den Edukten jedoch Wasser zugegeben (bevorzugt >0,5 mol pro mol Gruppen Z) bzw. zur Katalyse relativ geringe Mengen Säuren oder Basen. Die bevorzugte Konzentration der Säuren und/oder Basen ist > 0,1 mmol pro Liter der Mischung, besonders bevorzugt >0, mmol und < 10 mol pro Liter der Mischung. Beispiele sind anorganische bzw. organische Säuren oder Basen, insbesondere Ammoniak, Alkali- und Erdalkalihydroxide (NaOH, KOH), Amine, Ameisen-, Essig-, Propionsäure, Salzsäure, Schwefelsäure, Phosphorsäure. Besonders bevorzugt sind flüchtige Verbindungen, die leicht aus der Schicht, z.B. beim thermisch induzierten Aushärteschritt, auszutreiben sind. Es können auch Katalysatormischungen eingesetzt werden, wobei die Gesamtkatalysatorkonzentration bis zu 10 mol pro Liter betragen kann. Bevorzugt wird während der Synthese gerührt, ggfs. bis zur Anwendung der Beschichtung. Um die Reaktionsgeschwindigkeit herabzusetzen ist es möglich, das Gemisch zu kühlen.

In der Regel ist es vorteilhaft, abweichend vom üblichen Stand der Technik, eine schrittweise Hydrolyse durchzuführen, wobei in einem oder mehreren Schritten die nicht Rₚ-Gruppen tragenden Komponenten vorhydrolysiert werden z.B. durch Zugabe von Wasser, und im darauffolgenden Schritt die Rₚ-Gruppen tragenden Komponenten zugegeben werden. Führt man die Hydrolyse der Mischung aller Komponenten in einem Schritt durch, werden häufig Phasenseparationen in der Beschichtungszusammensetzung beobachtet, die zu inhomogenen Schichten führen können.

Nach oder während der Hydrolyseschritte können geignete, bevorzugt nicht umweltrelevante, Lösungsmittel (z.B. ein oder mehrfach funktionalisierte Alkohole (C₁-C₁₀, besonders bevorzugt leichtflüchtige wie Methanol, Ethanol, Propanol, Isopropanol) zur Einstellung des geeigneten Feststoffgehaltes (bevorzugt 0,1-50 Gew%) zugegeben werden.

Insbesondere wenn anorganische Säuren als Katalysatoren während der Synthese eingesetzt werden, können Ionenaustauscher nach einzelnen Hydrolyseschritten oder am Ende der Synthese eingesetzt werden, um Ionen, die zur Reduzierung der chemischen Stabilität bzw. der Topfzeit führen können, abzutrennen. Dabei wird der Ionenaustauscher üblicherweise in fester Form zugegeben und anschließend durch Filtration abgetrennt. Beispiele für verwendbare Ionenaustauscher sind Anionenaustauscher bzw. Kationenaustauscher, z.B. Dowex 50 W X 2 , Amberlyst A-21 (Fluka Chemie AG Schweiz).

Soll Wasser als Lösungsmittel verwendet werden kann nach erfolgten Hydrolyse- bzw. Teilkondensationsschritten der Hauptteil der gebildeten flüchtigen Komponenten z.B. durch Destillation abgetrennt werden. Anschließend wird Wasser zugegeben, wobei eine Suspension entsteht, zu der dann ggf. oberflächenaktive Substanzen (Tenside) zur Erniedrigung der Oberflächenspannung bzw. zur verbesserten Benetzung zugegeben werden können. Durch die Benetzung eines mikroporösen Substrates wird eine homogene Beschichtung auch der inneren Oberfläche des Substrates ermöglicht.

Als Substrat für die Beschichtung können im wesentlichen alle Materialien dienen, so z.B. Metall, Glas oder Polymere, insbesondere poröse Polymere.

Als Substrat geeignete Polymere umfassen Fluorpolymere, wie z.B. Polytetrafluorethylen (PTFE), insbesondere expandiertes PTFE (ePTFE), mikroporöses gerecktes PTFE, wie es in den US Patentschriften 3,953,566 und 4,187,390 beschrieben ist; gerecktes PTFE, das mit hydrophilen Imprägniermitteln und/oder Schichten versehen ist, wie es in der US Patentschrift 4,194,041 beschrieben ist; Polyolefine wie z.B. Polyethylen oder Polypropylen; Polyamide; Polyester; Polycarbonate; Polyurethane; Elastomere, wie Copolyetherester; und ähnliche, sowie Polymerblends.

Das Substrat kann in unterschiedlichen Formen z.B. als Membrane oder Film, als Dichtung oder als textiles Flächengebilde vorliegen. Unter textilen Flächengebilden versteht man im allgemeinen Gestricke, Gewirke, Gewebe oder Vliese. Das Substrat kann auch ein Laminat sein, bei dem mindestens eine Lage aus einer Membran oder einem Film gebildet ist und mindestens eine Lage aus einem textilen Flächengebilde besteht. Die Lagen können miteinander verbunden sein, z.B. in Form einer Verklebung Verschweißung oder Kaschierung. Sollte das Substrat in Form eines Laminats oder Films vorliegen, so kann dieses z.B. auch nach Behandlung mit der Beschichtung mit einem textilen Flächengebilde verbunden werden.

Nach Aufbringung des Beschichtungsmaterials durch übliche Beschichtungstechniken auf die Oberfläche des Substrats und bevorzugt thermisch induzierter Vernetzung bzw. Austreibung der flüchtigen Komponenten (Wasser, bei der Hydrolyse entstandene bzw. zugesetzte Alkohole) werden homogene dünne Beschichtungen erhalten. Im Falle von porösen Strukturen muß eine homogene sehr dünne (im Nanometer- bis Micrometer-Bereich) Beschichtung der inneren Oberfläche erreicht werden um die Porosität bzw. Porengrößen nicht signifikant zu reduzieren, d.h. zum Beispiel um Filmbildung bzw. Füllen der Poren zu vermeiden, was zu einer signifikanten Verringerung der Permeabilität führen würde. Die Dicke der Beschichtung ist dabei selbstverständlich abhängig von der Auftragsmenge, d.h. bei zunehmender Auftragsmenge wird in der Regel eine Reduzierung der Permeabilität beobachtet. Durch die Beschichtung wird die Permeabilität bevorzugt nur geringfügig beeinflußt, d. h. die Permeabilität ist im Vergleich zum unbeschichteten Substrat um höchstens 40 %, bevorzugt um höchstens 20 % reduziert.

Zur Erzeugung von polaren Oberflächengruppen auf dem Substrat, insbesondere OH-Gruppen, kann das Substrat vorbehandelt werden, wie z.B. durch Corona- oder Plasma-Vorbehandlung, um eine chemische Anbindung des Beschichtungsmaterials durch Kondensation der Oberflächen-OH-Gruppen mit OH-Gruppen von Sol-Bestandteilen zu ermöglichen.

Es können alle bekannten Beschichtungsmethoden zur Applizierung flüssiger Medien z.B. Sprühen, Tauchen, Rakeln, Siebdruck, insbesondere Walzenauftragstechniken angewendet werden. Dabei können die Konzentration, der Feststoffgehalt der Lösung und/oder der Druck oder die Temperatur variiert werden. Bei dem erfindungsgemäßen Verfahren ist die Einstellung des Feststoffgehaltes des Beschichtungsmaterials und damit die Regulierung der Dicke der Beschichtung z.B. durch die Veränderung der zugegebenen Lösungsmittelmenge (z.B. Isopropanol, Ethanol) während oder nach der Synthese in einfacher Weise möglich.

Im Anschluß an den Beschichtungsschritt kann das beschichtete Substrat ausgehärtet werden. Dies kann z.B. durch Wärmebehandlung, IR-Bestrahlung oder Vakuum geschehen. So kann die Beschichtung z.B. 0,1-60 Minuten bei 50°C - 250°C, vorzugsweise bei 120°C - 180°C ausgehärtet werden. Eine solche Behandlung kann auch zur Verdampfung der Lösungsmittel vorgenommen werden.

Das erfindungsgemäße beschichtete Material, das ein poröses Substrat, z.B. in Form von Folien, Membranen oder Laminaten aufweist kann aufgrund der hohen Permeabilität, der Temperaturbeständigkeit und der Oleophobie z.B. als Filtermedium vielseitig Einsatz finden. Auch für die Verwendung in Be- und Entlüftungselementen ist ein solches erfindungsgemäßes beschichtetes Material besonders geeignet, da aufgrund der Eigenschaften das beschichtete Material gleichzeitig den Ein- bzw. Durchtritt von flüssigen Medien verhindern kann. Beispiele für solche Verwendungen sind unter anderem Druckausgleichselemente für Elektronikgehäuse, Sensoren, Leuchten, Flüssigkeitsbehälter insbesondere in technischen oder Automobilanwendungen.

Bei nicht porösen Substraten kann das erfindungsgemäße Beschichtungsmaterial aufgrund seiner Eigenschaften z.B. als Anti-Schmutz- bzw. Anti-Haftmittel dienen.

Das erfindungsgemäße Be- und Entlüftungselement, das ein wie vorliegend beschriebenes erfindungsgemäßes beschichtetes Material umfaßt, wird in der Regel in der Form ausgeführt, daß eine Öffnung des zu be- und entlüftenden Behältnisses mit einem erfindungsgemäß beschichteten Substrat abgedeckt wird. Die Verbindung des erfindungsgemäß beschichteten Substrats (Membran, Laminat) mit dem Rand der Öffnung des Behältnisses kann in einer beliebigen Form bzw. Verbindungstechnik erfolgen, die eine flüssigkeitsdichte Verbindung ermöglicht. Beispiele für Verbindungstechniken sind Klemmen, Kleben, Einspritzen. Bevorzugt wird das erfindungsgemäß beschichtete Substrat mittels einer Selbstklebefolie mit dem Rand der Öffnung des zu be- und entlüftenden Behältnisses verbunden. Eine weitere bevorzugte Variante weist vorzugsweise einen Rahmen auf, der mindestens eine Luftein- bzw. -ausgangsöffnung besitzt, und die Luftein- bzw. ausgangsöffnung durch das beschichtete Material bedeckt ist. Der Rahmen hat die Funktion, eine einfache Verbindungstechnik mit dem zu be- und entlüftenden Behältnis zu ermöglichen, z.B. Einschrauben, Einrasten von Schnappverschlüssen etc..

Die Form und das Material des Rahmens, der das beschichtete Material trägt, bzw. der mit diesem Material verbunden ist, kann vielseitig variiert werden.

Je nach Einsatzgebiet kann der Rahmen aus Metall, Keramik, Kunststoff (insbesondere Polypropylene (PP) oder Polyethylene (PE)) bestehen.

Form und Größe des Rahmens ist abhängig von der Aussparung bzw. Öffnung des zu be- oder entlüftenden Behälter, in die das Element eingesetzt werden soll. Der Rahmen des erfindungsgemäßen Be- und Entlüftungselementes kann die Form eines Ringes oder einer Hülse besitzen. Bevorzugt weist das erfindungsgemäße Be- und Entlüftungselement die Form einer Schraube mit einer axialen Durchgangsbohrung auf, wobei die Durchgangsbohrung im Bereich des Schraubenkopfes vollständig mit dem beschichteten Material bedeckt ist.

Das beschichtete Material kann auf verschiedene Weisen mit dem Rahmen verbunden werden. So kann dieses z.B. bei einem zweiteiligen Rahmen bestehend aus zwei Ringen zwischen diesen Ringen durch Einklemmen befestigt werden. Bevorzugt wird das beschichtete Material mit dem Rahmen verklebt. Hierbei wird das beschichtete Material mit einer Klebeschicht versehen und bei der Herstellung des Rahmens an diesem befestigt.

Anhand der beiliegenden Figuren werden bevorzugte Ausführungsformen des Be- und Entlüftungselementes beschrieben.

Es zeigen:
- Figur 1: eine schematische Schnittansicht eines Be- und Entlüftungselementes in Form einer Schraube;
- Figur 2: eine schematische Schnittansicht eines Be- und Entlüftungselementes in Form einer Schraube mit Abdeckung; und
- Figur 3: einen Schnitt durch das beschichtete Material 13 in einem erfindungsgemäßen Be- und Entlüftungselement.

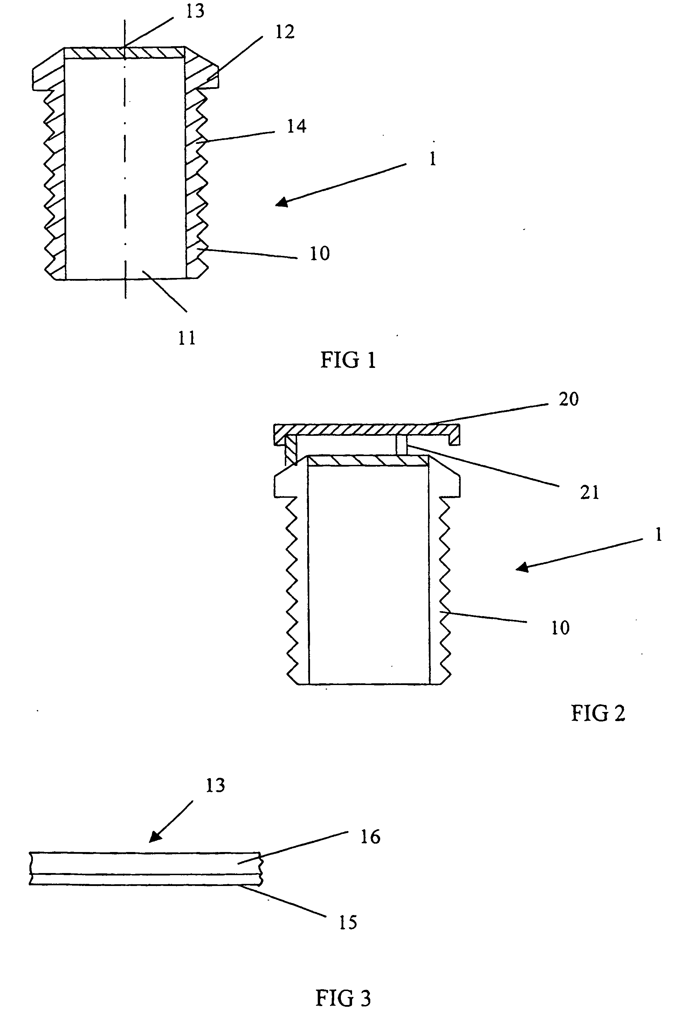

In Figur 1 ist ein Be- und Entlüftungselement 1 dargestellt, dessen Rahmen 10 die Form einer Schraube mit einer axialen Durchgangsbohrung 11 aufweist. Im Bereich des Schraubenkopfes 12 ist die Durchgangsbohrung 11 durch das beschichtete Material 13 abgedeckt. Das beschichtete Material 13 besteht bei dieser Ausführungsform vorzugsweise aus einem Substrat in Form einer Membran 15, beispielsweise aus ePTFE, oder eines Laminates aus einer Lage einer Membran 15 und einer Lage eines textilen Flächengewebes 16 (siehe Figur 3). Dieses Substrat ist mit dem erfindungsgemäßen Beschichtungsmaterial beschichtet.

Durch das an der Außenseite des Rahmens 10 vorgesehene Gewinde 14 kann das Be- und Entlüftungselement leicht in eine Aussparung, z.B. einer Bohrung, in einem Gehäuse eingeschraubt werden.

Die Position des beschichteten Materials im Rahmen kann je nach Anwendung und Herstellungsverfahren am oberen Ende des Schraubenkopfes 12 oder in einer gewissen Tiefe der Durchgangsbohrung 11 angeordnet sein.

In Figur 2 ist eine weitere Ausführungsform des Be- und Entlüftungselementes 1 dargestellt, wobei zu der in Figur 1 beschriebenen Ausführungsform zusätzlich eine Abdeckung 20 vorgesehen ist. Diese Abdeckung 20 ist über Befestigungselemente 21 z.B. Krallen, die über den Umfang des Schraubenkopfes beabstandet angeordnet sind, kraftschlüssig mit der Hülse 10 verbunden. Zwischen dem oberen Ende der Hülse 10 und dem unteren Ende der Abdeckung 20 ist ein Abstand vorgesehen, durch den eine Luftzu- bzw. -abfuhr erfolgen kann.

Das erfindungsgemäße Be- und Entlüftungselement weist aufgrund der Eigenschaften des verwendeten beschichteten Materials eine hervorragende chemische und thermische Stabilität auf, wobei auch bei hohen Temperaturen das beschichtete Material eine Oleophobie besitzt. So kann das erfindungsgemäße Be- und Entlüftungselement z.B. als Druckausgleichselement für Verschlußkappen eingesetzt werden, wobei der Austritt von Flüssigkeiten aus dem Behälter vermieden wird und gleichzeitig eine ausreichende Be- und Entlüftung des Behälters gewährleistet ist.

### Ölabweisung

Der Ölwert wird nach AATCC 118-1983 (American National Standard) bestimmt.

Dabei werden bei Raumtemperatur Tropfen von 8 definierten Flüssigkeiten mit definierten Oberflächenspannungen (abnehmend von Flüssigkeit 1 bis 8) auf die Oberfläche aufgetragen. Die Ölwertbestimmung erfolgt derart, das bestimmt wird welche Flüssigkeit (1-8) innerhalb von 30 Sekunden die Oberfläche bzw. Struktur nicht benetzt. Umso höher die Flüssigkeitsnummer (Ölwert) desto höher die Ölabweisung (Oleophobie).

Zur Messung des Ölwerts des Beschichtungsmaterials an sich kann ein Film des Materials derart hergestellt werden, das z.B. eine Aluminiumfolie beschichtet wird und das Aluminium nach z.B. thermischer Aushärtung der Schicht mittels verdünnter Säure abgeätzt wird um einen Film des Materials zu erhalten. Im Falle nichtporöser Oberflächen wird nicht-benetzt derart definiert, daß der fortschreitende Kontaktwinkel für die entsprechende Flüssigkeit ≥ 50 ° beträgt.

### Permeabiliät

Zur Bestimmung der Permeabilität wurde das Gerät der Fa. Coulter Electronics Limited, Luton England, Typ Porometer II verwendet. Dabei wird bei einem definierten Druck (1 bar) die durchtretende Luftmenge in Litern pro Minute und cm² bestimmt .

### Kontaktwinkel

Zur Messung der Kontaktwinkel wird ein Goniometermikroskop (Krüss Gmbh, Hamburg, Typ G40) eingesetzt. Dabei wird der Kontaktwinkel des auf die beschichtete Oberfläche aufgebrachten Tropfens bei Raumtemperatur optisch gemessen.

### Porengrößenbestimmung

Zur Bestimmung der Porengrößen wurde das Gerät der Firma Coulter Electronics Limited, Luton England, Typ Porometer II verwendet. Das Gerät mißt automatisch Porengrößenverteilungen in porösen Materialien durch die definierte Austreibung von Flüssigkeiten, beschrieben in ASTM Std. F316-86 (Amercian National Standard). Die nominale Porengröße ist die mittlere Porengröße.

Die Erfindung soll im folgenden anhand der Beispiele näher erläutert werden. Selbstverständlich sind auch alle anderen, der erfindungsgemäßen Lehre entsprechenden, Beschichtungskomponenten sowie Substrate verwendbar.

### Beispiele

Beispiele 1 und 2 beschreiben die Synthese von erfindungsgemäßem Beschichtungsmaterial, die Beschichtung eines Substrats mit einer derartigen Beschichtungmaterial und die Eigenschaften des beschichteten Substrats. Beide beispielhaft beschichtete Substrate weisen einen Ölwert von 7 auf.

Beispiele 3 und 4 beschreiben erfindungsgemäße beschichtete Materialien, bei denen als Substrat Laminate eingesetzt werden.

In Vergleichsbeispiel 1 wurden statt der erfindungsgemäß mit einer hydrolisierbaren Gruppe funktionalisierte Perfluorpolyether, gemäß der Lehre der EP-PS 0 587 667, Alkoxide mit perfluorierten n-Alkanen, verwendet. Mit dieser Beschichtung konnte auf dem selben Substrat, wie in Beispielen 1 und 2 verwandt, nur ein Ölwert von 2 erreicht werden.

Für Vergleichsbeispiel 2 wurde ein alkoxyfunktionalisierter Perfluorpolyether als Einzelkomponente, wie in JP-OS 4-213384 oder auch in den meisten Beispielen der WO 97/01508 offenbart, hydrolysiert und als Beschichtungsmaterial verwendet. Hier wurde ebenfalls nur ein Ölwert von 2 erhalten. Dies zeigt, daß sich nur bei Verwendung von zwei Komponenten die gewünschten hohen Ölwerte erzielen lassen.

Bei Vergleichsbeispiel 3 wurden zwei Komponenten (Tetraethoxysilan und C₆F₁₃CH₂CH₂Si(OC₂H₅)₃) im Prinzip entsprechend der Lehre aus Beispiel 4 der WO 97/01508 zur Herstellung der Beschichtung verwendet. Auch hier lies sich nur ein Ölwert von 2 erzielen. Dies zeigt wiederum, daß nicht nur die Verwendung von mindestens zwei Komponenten zwingend erforderlich ist, sondern auch die spezifische Auswahl der erfindungsgemäßen Komponenten, um eine hohe Oleophobie zu erreichen. Bei diesem Beispiel wurden fluorierte Lösungsmittel, entsprechend der Lehre der WO 97/01508 verwendet.

Vergleichsbeispiel 4 entspricht im Prinzip Vergleichsbeispiel 3, nur daß in diesem Fall ein Gemisch aus Wasser und Isopropanol als Lösungsmittel verwendet wurde, wie es in der vorliegenden Erfindung als vorteilhaft beschrieben ist. Auch in diesem Fall wurde nur ein Ölwert von 2 erreicht.

### Beispiel 1

Zu einer Mischung aus 357g Methyltriethoxysilan (Hüls), 113g Tetraethoxysilan (Hüls) und 200g Kieselsol (Bayer Levasil 300/30 (30% SiO₂ in Wasser)) werden unter starkem Rühren 4g Salzsäure (37%) zugegeben. Innerhalb von 2h kühlt das Reaktionsgemisch ab und 1348g Isopropanol werden unter Rühren zugegeben. Nach 14h Rühren werden zu 100g der oben genannten Mischung (Mischung A) 89g Isopropanol und 11,25g perfluorpolyetherfunktionalisiertes Triethoxysilan (CF₃[OCF(CF₃)CF₂]_{d}(OCF₂)ₑOCONHCH₂CH₂CH₂Si(OC₂H₅)₃, Molekulargewicht: 800-900; MF407 von Ausimont) zugegeben.

Das Beschichtungsmaterial wird mittels Walzenauftragstechnik (Beschichtung im Spalt zwischen zwei Walzen, der mit Beschichtungsmaterial gefüllt ist) auf eine mikroporöse Polymermembran, beschrieben in US-Patent 4,194,041, (nominale Porengröße 0,2 µm, Dicke 0,03 mm) appliziert. Die Auftragsmenge ergibt sich im wesentlichen durch den Feststoffgehalt (hier 11%) sowie durch Spalteinstellungen und Drücke der Walzen.

Zum Verdampfen der Lösungsmittel bzw. thermischen Aushärtung der Beschichtung wird die Membrane im Anschluß an den Beschichtungsschritt in einem Durchlaufofen bei 150°C und einer Verweilzeit des beschichteten Materials von 1,5 Minuten behandelt.

Die Auftragsmenge an Feststoff wird durch Differenzwägung zu 4,4g/m² bestimmt.

Der Ölwert beträgt auf beiden Seiten 7. Nach Auslagerung der Membran bei 160°C für 12h, bei 200°C für 2h und bei 250°C für 2h wird jeweils der Ölwert bestimmt. Bei allen Messungen beträgt der Ölwert unverändert 7. Die Permeabilität der beschichteten Membran beträgt 4,8 L/min pro cm².

Nach Aufbringen eines Tropfens ATF-Öl auf die beschichtete Oberfläche und anschließender Auslagerung bei 160°C für 12 Stunden beträgt der Kontaktwinkel des Tropfens > 10°.

### Beispiel 2

Zu einer Mischung aus 22,6g Tetraethoxysilan und 20g Isopropanol werden unter Rühren 85g MF407 zugegeben. Anschließend werden 6,3g 0,1 mol HCl zugegeben und über Nacht gerührt. Das Material wird vor Beschichtung im Verhältnis 1:4 Gewichtsteilen mit Isopropanol verdünnt.

Das weitere Vorgehen ist analog zu Beispiel 1. Die unbeschichtete Membran hat hierbei eine Permeabilität von 4,4 L/min pro cm².

Die Auftragsmenge an Feststoff wird zu 6,8g/m² bestimmt.

Der Ölwert beträgt auf beiden Seiten 7. Die Permeabilität der beschichteten Membran beträgt 3,0 L/min pro cm².

Nach Aufbringen eines Tropfens ATF-Öl auf die beschichtete Oberfläche und anschließender Auslagerung bei 160°C für 12 Stunden beträgt der Kontaktwinkel des Tropfens > 10°.

### Beispiel 3

Beschichtungsmaterial, Beschichtungstechnik und Aushärtung sind analog zu Beispiel 1. Als Substrat wird ein Laminat (Flächengewicht 95 ± 10 g/m², Dicke 0,1mm) aus ePTFE, beschrieben in US-Patent 4,194,041 (nominale Porengröße 0,5 µm), und einem Nylon Taffeta Textil verwendet.

Die Auftragsmenge an Feststoff wird durch Differenzwägung zu 5g/m² bestimmt.

Der Ölwert beträgt sowohl auf dem ePTFE als auch auf der Nylon Taffeta Oberfläche 7. Die Permeabilität der beschichteten Membran beträgt bei einem Druck von 0,1 bar 0,6 L/min pro cm² und ist damit unverändert im Vergleich zum unbeschichteten Laminat.

Nach Aufbringen eines Tropfens ATF-Öl auf die beschichtete ePTFE Oberfläche und anschließender Auslagerung bei 160°C für 12 Stunden tritt das Öl nicht in die poröse Struktur ein, d.h. der Kontaktwinkel des Tropfens ist > 10°.

### Beispiel 4

Beschichtungsmaterial, Beschichtungstechnik und Aushärtung sind analog zu Beispiel 1. Als Substrat wird ein Laminat (Flächengewicht 99 ± 10 g/m², Dicke 0,1mm) aus ePTFE, beschrieben in US-Patent 4,194,041 (nominale Porengröße 0,9 µm), und einem Polyester Textil (nonwoven) verwendet.

Der Ölwert beträgt sowohl auf der ePTFE als auch auf der Polyesteroberfläche 6-7. Die Permeabilität der beschichteten Membran beträgt bei einem Druck von 0.1 bar 1,7 L/min pro cm² und ist damit um nicht mehr als 20 % gegenüber dem unbeschichteten Substrat verändert.

Nach Aufbringen eines Tropfens ATF-Öl auf die beschichtete ePTFE Oberfläche und anschließender Auslagerung bei 160°C für 12 Stunden tritt das Öl nicht in die poröse Struktur ein, d.h. der Kontaktwinkel des Tropfens ist > 10°.

### Vergleichsbeispiel 1

Es wird analog Beispiel 1 vorgegangen, allerdings wird zu 100g von Mischung A statt MF407 14g C₆F₁₃CH₂CH₂Si(OC₂H₅) (Fa. ABCR) sowie 188g Isopropanol zugegeben.

Das weitere Vorgehen ist analog zu Beispiel 1. Die unbeschichtete Membran hat eine Permeabilität von 4,4 L/min pro cm².

Die Auftragsmenge an Feststoff wird zu 2g/m² bestimmt.

Der Ölwert beträgt auf beiden Seiten 2. Die Permeabilität der beschichteten Membran beträgt 3 L/min pro cm².

### Vergleichsbeispiel 2

15g MF407 werden mit 185g Isopropanol verdünnt und unter Rühren mit 0,95g 0, 1 molarer HCl versetzt und über Nacht gerührt.

Das weitere Vorgehen ist analog zu Beispiel 1. Die unbeschichtete Membran hat eine Permeabilität von 4,2 L/min pro cm².

Die Auftragsmenge an Feststoff wird zu 2 g/m² bestimmt.

Der Ölwert beträgt auf beiden Seiten 2. Die Permeabilität der beschichteten Membran beträgt 3,0 L/min pro cm².

### Vergleichsbeispiel 3

5 g Tetraethoxysilan, 5 g C₆F₁₃CH₂CH₂Si(OC₂H₅)₃ und 50 g FC 75 (Perfluoronaphtyl-Tetrahydrofuran, erhältlich unter dem Markennamen Fluorinert FC 75, PCR, Inc. Gainesville, Florida) werden gemischt und unter Rühren mit 14,9 g Trifluoressigsäure versetzt und 3 Stunden gerührt. Anschließend werden 75.9g FC 75 zugegeben und darauffolgend analog zu Beispiel 1 ePTFE mittels Walzenauftrag beschichtet. Die Aushärtung erfolgt für 30 Minuten bei 150°C. Der Ölwert beträgt 2. Die Auftragsmenge beträgt 10 g/m². Die Permeabilität wird zu 1,2 L/min pro cm² bestimmt.

### Vergleichsbeispiel 4

208,8 g Tetraethoxysilane und 200 g Isopropanol werden unter Rühren mit 27 g 0,1n HCl versetzt. Nach 17 Stunden Rühren werden zu 10 g des Reaktionsgemisches 12,5g C₆F₁₃CH₂CH₂Si(OC₂H₅)₃ und 75g Isopropanol zugegeben. Anschließend wird analog zu Beispiel 1 ePTFE mittels Walzenauftrag beschichtet. Die Aushärtung erfolgt für 30 Minuten bei 140°C. Der Ölwert beträgt 2. Die Auftragsmenge beträgt 3,5 g/m². Die Permeabilität wird zu 3,7 L/min pro cm² bestimmt.

## Patentansprüche

1. Beschichtungsmaterial, das Kondensate
mindestens einer Verbindung A der allgemeinen Formel RₐMZ_{b}
mit a = 0 - 3; b = 1 - 4; a + b = 3, 4, und
mindestens einer Verbindung B der allgemeinen Formel R'ₓMZ_{y}
mit x = 1 - 3; y = 1 - 3; x + y = 3; 4 umfasst,
wobei
R und R' nicht-hydrolisierbare organische Gruppen sind,
M ein Element des Periodensystems ausgewählt aus den Hauptgruppen III - V oder aus den Nebengruppen II - IV ist,
Z eine hydrolisierbare Gruppe ist, und
mindestens ein R nicht gleich mindestens einem R' ist, und
wobei
mindestens eine Verbindung B der allgemeinen Formel R'ₓMZ_{y},
mit R' ausgewählt aus der Gruppe bestehend aus (Rₚ-X-) und Rₘ, der Formel
(Rₚ-X-)ₐSiR_{mb}Z_{c}
mit a+b+c = 3, 4; a= 1 - 3; b = 0, 1, 2 genügt,
wobei
Rₚ eine Perfluorpolyetherstruktur ist,
X ausgewählt wird aus der Gruppe bestehend aus (CH₂)_{z} (z = 2; 4), COOCH₂CH(OH)CH₂, COO, SO₂NH, CONH, COOCH₂CH(OH)(CH₂)_{z} (z = 2 - 4), COO(CH₂)_{z} (z = 2 - 4), SO₂NH(CH₂)_{z} (z = 2 - 4), und CONH(CH₂)_{z} (z = 2 - 4), und
Rₘ eine nicht-hydrolisierbare organische Gruppe ist und
für Rₘ mit einer Rₚ-Gruppe diese Rₚ-Gruppe von Si durch mindestens zwei Atome getrennt ist.

2. Beschichtungsmaterial nach Anspruch 1, wobei M Si ist.

3. Beschichtungsmaterial nach einem der Ansprüche 1 oder 2, wobei Z OR" ist und wobei R" eine organische Gruppe ist.

4. Beschichtungsmaterial nach Anspruch 1 bis 3, wobei mindestens eine Verbindung B R'Si(OR)₃ ist und R' eine nicht-hydrolisierbare organische Gruppe ist.

5. Beschichtungsmaterial nach einem der Ansprüche 1 bis 4, wobei mindestens eine Verbindung B
CF₃[OCF(CF₃)CF₂]_{d}(OCF₂)eOCONHCH₂CH₂CH₂Si(OR)₃ ist (d und e ≥ 0, bevorzugt d= 1-10).

6. Beschichtungsmaterial nach einem der Ansprüche 1 bis 5, wobei die Perfluorpolyetherstruktur 6-100 Fluoratome enthält.

7. Beschichtungsmaterial nach einem der Ansprüche 1 bis 6, wobei das molare Verhältnis der Gruppen R:R' zwischen 0,1:100 und 100 : 0,1 liegt.

8. Beschichtungsmaterial nach einem der Ansprüche 1 bis 7, wobei mindestens eine Verbindung A Si(OR")₄ ist und R" ein C₁-C₅ Alkyl ist.

9. Beschichtungsmaterial nach einem der Ansprüche 1 bis 7, wobei mindestens eine Verbindung A RSi(OR")₃ ist, R eine nicht-hydrolisierbare organische Gruppe ist und R"ein C₁-C₅ Alkyl ist.

10. Beschichtungsmaterial nach einem der Ansprüche 1 bis 9, wobei das Material auch SiO₂ Partikel enthält.

11. Beschichtungsmaterial nach einem der Ansprüche 1 bis 10 mit einem Ölwert ≥ 3.

12. Beschichtungsmaterial nach einem der Ansprüche 1 bis 10 mit einem Ölwert ≥ 5.

13. Beschichtungsmaterial nach einem der Ansprüche 1 bis 10 mit einem Ölwert ≥ 7.

14. Verfahren zur Herstellung eines Beschichtungsmaterials nach einem der vorhergehenden Ansprüche 1 - 13, wobei die Verbindungen A und B gemischt und hydrolisiert werden.

15. Verfahren nach Anspruch 14, wobei die Verbindungen A und B mit Wasser gemischt werden.

16. Verfahren nach Anspruch 15, wobei die zugegebene Wassermenge > 0,5 mol pro mol Gruppen Z ist.

17. Verfahren nach Anspruch 14 bis 16, wobei Säuren oder Basen zugegeben werden.

18. Verfahren nach Anspruch 17, wobei die Konzentration der Säuren oder Basen > 0,1 mmol pro Liter der Mischung ist.

19. Verfahren nach Anspruch 14 bis 18, wobei Metalloxid-Partikel zugegeben werden.

20. Verfahren nach Anspruch 19, wobei die Metalloxid-Partikel Kieselsol sind.

21. Beschichtetes Material, umfassend: ein poröses Polymer und ein auf mindestens einer Oberfläche des porösen Polymers aufgebrachtes Beschichtungsmaterial, das Kondensate
mindestens einer Verbindung A der allgemeinen Formel RₐMZ_{b} (a= 0-3; b=1-4; a+b=3, 4), wobei R eine nicht-hydrolisierbare organische Gruppe ist,
und mindestens einer Verbindung B der allgemeinen Formel R'ₓ MZ_{y} (x=1-3; y= 1-3; x+y=3, 4) wobei R' eine nicht-hydrolysierbare organische Gruppe ist und mindestens ein R' eine von M durch mindestens zwei Atome getrennte Perfluorpolyetherstruktur enthält,
wobei M ein Element des Periodensystems ausgewählt aus den Hauptgruppen III - V oder aus den Nebengruppen II - IV und Z eine hydrolysierbare organische Gruppe ist,
und wobei mindestens ein R nicht gleich mindestens ein R' ist, umfaßt.

22. Beschichtetes Material, umfassend: ein Substrat und ein auf mindestens einer Oberfläche des Substrates aufgebrachtes Beschichtungsmaterial nach einem der Ansprüche 1 - 13.

23. Beschichtetes Material nach Anspruch 22, wobei das Substrat ein poröses Polymer ist.

24. Beschichtetes Material nach Anspruch 21 oder 23, wobei das Polymer aus einer Gruppe bestehend aus mindestens einem Fluorpolymer ausgewählt ist.

25. Beschichtetes Material nach Anspruch 24, wobei das Polymer expandiertes Polytetrafluorethylen (ePTFE) ist.

26. Beschichtetes Material nach einem der Ansprüche 21 bis 25, wobei das Substrat oder das poröse Polymer in Form einer Membrane, einer Dichtung oder eines textilen Flächengebildes vorliegt.

27. Beschichtetes Material nach einem der Ansprüche 21 bis 25, wobei das Substrat oder das poröse Polymer in Form eines Laminats, bestehend aus mindestens einer Lage einer Membrane und mindestens einer Lage eines textilen Flächengebildes, vorliegt.

28. Beschichtetes Material nach einem der Ansprüche 21 bis 26, wobei das Substrat oder poröse Polymer eine Membran ist und mit einem textilen Flächengebilde verbunden ist.

29. Beschichtetes Material nach einem der Ansprüche 21 bis 28 mit einem Ölwert ≥ 3.

30. Beschichtetes Material nach einem der Ansprüche 21 bis 28 mit einem Ölwert ≥ 5.

31. Beschichtetes Material nach einem der Ansprüche 21 bis 28 mit einem Ölwert ≥ 7.

32. Beschichtetes Material nach einem der Ansprüche 21 bis 31, wobei der Ölwert des beschichteten Substrats oder des porösen Polymers nach Wärmebehandlung bei 160°C für 12 Stunden unverändert bleibt.

33. Beschichtetes Material nach einem der Ansprüche 21 bis 31, wobei der Ölwert des beschichteten Substrats oder des porösen Polymers nach Wärmebehandlung bei 200°C für 2 Stunden unverändert bleibt.

34. Beschichtetes Material nach einem der Ansprüche 21 bis 31, wobei der Ölwert des beschichteten Substrats oder des porösen Polymers nach Wärmebehandlung bei 250°C für 2 Stunden unverändert bleibt.

35. Beschichtetes Material nach einem der Ansprüche 21 bis 34, wobei der Kontaktwinkel eines Tropfens Getriebeöl (ATF Öl) auf der Beschichtung > 10° nach Wärmebehandlung bei 160°C für 12 Stunden beträgt.

36. Verfahren zur Beschichtung eines Substrats, wobei ein Beschichtungsmaterial nach einem der Ansprüche 1 - 13 auf das Substrat aufgebracht und ausgehärtet wird.

37. Verfahren zur Beschichtung eines porösen Polymers, wobei ein Beschichtungsmaterial nach Anspruch 21 oder nach einem der Ansprüche 1 - 13 auf das poröse Polymer aufgebracht und ausgehärtet wird.

38. Verfahren nach Anspruch 36 oder 37, wobei die Beschichtung durch Wärmebehandlung ausgehärtet wird.

39. Verfahren nach Anspruch 36 oder 37, wobei die Beschichtung 0,1 -60 Minuten bei 50°C - 250°C, vorzugsweise bei 120°C - 180°C ausgehärtet wird.

40. Verwendung eines beschichteten Materials gemäß einem der Ansprüche 21 bis 35 als Filtermedium.

41. Verwendung eines beschichteten Materials gemäß einem der Ansprüche 21 bis 35 als Be- und Entlüftungselement.

42. Be- und Entlüftungselement **dadurch gekennzeichnet, dass** dieses ein beschichtetes Material nach einem der Ansprüche 21 bis 35 umfasst.

43. Be- und Entlüftungselement gemäß Anspruch 42 **dadurch gekennzeichnet, daß** dieses einen Rahmen aufweist, der mindestens eine Luftein- bzw. -ausgangsöffnung besitzt und die Luftein- bzw. - ausgangsöffnung durch das beschichtete Material bedeckt ist.

44. Be- und Entlüftungselement gemäß Anspruch 43, **dadurch gekennzeichnet, daß** das beschichtete Material mit dem Rahmen verklebt ist.

45. Be- und Entlüftungselement gemäß einem der Ansprüche 43 oder 44, **dadurch gekennzeichnet, daß** der Rahmen die Form einer Schraube mit einer axialen Durchgangsbohrung aufweist, wobei die Durchgangsbohrung im Bereich des Schraubenkopfes vollständig mit dem beschichteten Material bedeckt ist.

## Claims

1. A coating material, comprising condensates of
at least one compound A of general formula RₐMZ_{b}
where a=0-3, b = 1 - 4; a + b = 3, 4, and
at least one compound B of general formula R'ₓMZ_{y}
where x = 1 - 3; y = 1 - 3; x + y = 3; 4,
wherein
R and R' are nonhydrolyzable organic groups,
M is an element of the periodic system selected from main groups III - V or from auxiliary groups II - IV,
Z is a hydrolyzable group, and
at least one R is not identical to at least one R', and
wherein
at least one compound B of the general formula R'ₓMZ_{y},
where R' is selected from the group comprising (Rp-X-) and Rₘ, satisfies the formula (Rₚ-X-)ₐSiR_{mb}Z_{c}
where a + b + c = 3, 4; a = 1 - 3; b = 0, 1, 2,
wherein
Rₚ is a perfluoropolyether structure,
X is selected from the group comprising (CH₂)_{z} (z = 2; 4), COOCH₂CH(OH)CH₂, COO, SO₂NH, CONH, COOCH₂CH(OH)(CH₂)_{z} (z = 2 - 4), COO(CH₂)_{z} (z = 2 - 4), SO₂NH(CH₂)_{z} (z = 2 - 4), and CONH(CH₂)_{z} (z = 2 - 4), and
Rₘ is a nonhydrolyzable organic group, and
for Rₘ with an Rₚ group said Rₚ group is separated from Si by at least two atoms.

2. A coating material according to claim 1, wherein M is Si.

3. A coating material according to either of claims 1 and 2, wherein Z is OR" and wherein R" is an organic group.

4. A coating material according to claims 1 to 3, wherein at least one compound B is R'Si(OR)₃ and R' is a nonhydrolyzable organic group.

5. A coating material according to any of claims 1 to 4, wherein at least one compound B is CF₃[(OCF(CF₃)CF₂]_{d}(OCF₂)eOCONHCH₂CH₂CH₂Si(OR)₃ (d and e ≥ 0, preferably d = 1 - 10).

6. A coating material according to any of claims 1 to 5, wherein the perfluoropolyether structure contains 6-100 fluorine atoms.

7. A coating material according to any of claims 1 to 6, wherein the molar ratio of the groups R:R' is between 0.1:100 and 100:0.1.

8. A coating material according to any of claims 1 to 7, wherein at least one compound A is Si(OR")₄ and R" is a C₁-C₅ alkyl.

9. A coating material according to any of claims 1 to 7, wherein at least one compound A is RSi(OR")₃, R is a nonhydrolyzable organic group, and R" is a C₁-C₅ alkyl.

10. A coating material according to any of claims 1 to 9, wherein the material also contains SiO₂ particles.

11. A coating material according to any of claims 1 to 10 with an oil value ≥ 3.

12. A coating material according to any of claims 1 to 10 with an oil value ≥ 5.

13. A coating material according to any of claims 1 to 10 with an oil value ≥ 7.

14. A process for producing a coating material according to any of the above claims 1 to 13, wherein compounds A and B are mixed and hydrolyzed.

15. A process according to claim 14, wherein compounds A and B are mixed with water.

16. A process according to claim 15, wherein the added quantity of water is > 0.5 mol per mol of Z groups.

17. A process according to claims 14 to 16, wherein acids or bases are added.

18. A process according to claim 17, wherein the concentration of acids or bases is > 0.1 mmol per liter of mixture.

19. A process according to claims 14 to 18, wherein metal oxide particles are added.

20. A process according to claim 19, wherein the metal oxide particles are silica sols.

21. A coated material, comprising: a porous polymer and a coating material applied to at least one surface of the porous polymer, which material comprises condensates of
at least one compound A of the general formula RₐMZ_{b} (a = 0 - 3; b = 1 - 4; a + b = 3, 4), wherein R is a nonhydrolyzable organic group,
and at least one compound B of the general formula R'ₓMZ_{y} (x = 1 - 3; y = 1 - 3; x + y = 3, 4), wherein R' is a nonhydrolyzable organic group, and at least one R' contains a perfluoropolyether structure separated from M by at least two atoms,
wherein M is an element of the periodic system selected from main groups III - V or from auxiliary groups II - IV, and Z is a hydrolyzable organic group,
and wherein at least one R is not identical to at least one R'.

22. A coated material, comprising: a substrate and a coating material according to any of claims 1 to 13 applied to at least one surface of the substrate.

23. A coated material according to claim 22, wherein the substrate is a porous polymer.

24. A coated material according to claim 21 or 23, wherein the polymer is selected from a group comprising at least one fluoropolymer.

25. A coated material according to claim 24, wherein the polymer is expanded polytetrafluoroethylene (ePTFE).

26. A coated material according to any of claims 21 to 25, wherein the substrate or the porous polymer is present in the form of a membrane, a sealant or a textile fabric.

27. A coated material according to any of claims 21 to 25, wherein the substrate or porous polymer is present in the form of a laminate, consisting of at least one layer of a membrane and at least one layer of a textile fabric.

28. A coated material according to any of claims 21 to 26, wherein the substrate or porous polymer is a membrane and bonded to a textile fabric.

29. A coated material according to any of claims 21 to 28 with an oil value ≥ 3.

30. A coated material according to any of claims 21 to 28 with an oil value ≥ 5.

31. A coated material according to any of claims 21 to 28 with an oil value ≥ 7.

32. A coated material according to any of claims 21 to 31, wherein the oil value of the coated substrate or the porous polymer remains unchanged after heat treatment at 160°C for 12 hours.

33. A coated material according to any of claims 21 to 31, wherein the oil value of the coated substrate or the porous polymer remains unchanged after heat treatment at 200°C for 2 hours.

34. A coated material according to any of claims 21 to 31, wherein the oil value of the coated substrate or the porous polymer remains unchanged after heat treatment at 250°C for 2 hours.

35. A coated material according to any of claims 21 to 34, wherein the contact angle of a drop of transmission oil (ATF oil) on the coating is > 10° after heat treatment at 160°C for 12 hours.

36. A process for coating a substrate, wherein a coating material according to any of claims 1 to 13 is applied to substrate and cured.

37. A process for coating a porous polymer, wherein a coating material according to claim 21 or according to any of claims 1 to 13 is applied to the porous polymer and cured.

38. A process according to claim 36 or 37, wherein the coating is cured by heat treatment.

39. A process according to claim 36 or 37, wherein the coating is cured for 0.1-60 minutes at 50°C - 250°C, preferably at 120°C - 180°C.

40. Use of a coated material according to any of claims 21 to 35 as a filter medium.

41. Use of a coated material according to any of claims 21 to 35 as an aeration and deaeration element.

42. An aeration and deaeration element, **characterized in that** it comprises a coated material according to any of claims 21 to 35.

43. An aeration and deaeration element according to claim 42, **characterized in that** it has a frame that possesses at least one air inlet opening or air outlet opening, and the air inlet opening or air outlet opening is covered by the coated material.

44. An aeration and deaeration element according to claim 43, **characterized in that** the coated material is glued to the frame.

45. An aeration and deaeration element according to either of claims 43 and 44, **characterized in that** the frame has the shape of a screw with an axial through-hole, the through-hole being completely covered with the coated material in the area of the screw head.

## Revendications

1. Matériau de revêtement, qui comprend des condensats
d'au moins un composé A selon la formule générale RₐMZ_{b}
dans laquelle a = 0 - 3 ; b = 1 - 4 ; a + b = 3, 4, et
d'au moins un composé B de la formule générale R'ₓMZ_{y}
dans laquelle x = 1 - 3 ; y = 1 - 3 ; x + y = 3, 4,
R et R' étant des groupes organiques non hydrolysables,
M étant un élément du système périodique sélectionné dans les groupes principaux III-V ou dans les sous-groupes II-IV,
Z étant un groupe hydrolysable, et
au moins un R n'étant pas égal à au moins un R', et
au moins un composé B selon la formule générale R'xMZy,
dans laquelle R' est sélectionné dans le groupe constitué de (Rp-X-) et Rₘ selon la formule (Rₚ-X-)ₐSiR_{mb}Z_{c}
dans laquelle a + b + c = 3, 4 ; a =1- 3 ; b = 0, 1, 2 étant suffisant,
Rp étant une structure polyéther perfluoré,
X étant sélectionné dans le groupe constitué de (CH₂)_{z} (z = 2 ; 4), COOCH₂CH(OH)CH₂, COO, SO₂NH, CONH, COOCH₂CH(OH)(CH2)z (z = 2 - 4), COO(CH₂)_{z} (z = 2 - 4), SO₂NH(CH₂)_{z} (z = 2 - 4), et CONH(CH₂)z (z = 2 - 4), et
Rₘ étant un groupe organique non hydrolysable et
pour Rₘ ayant un groupe Rₚ, ce groupe Rₚ étant séparé de Si par au moins deux atomes.

2. Matériau de revêtement selon la revendication 1, M étant du Si.

3. Matériau de revêtement selon une des revendications 1 ou 2, Z étant de formule OR" et R" étant un groupe organique.

4. Matériau de revêtement selon une des revendications 1 à 3, au moins une composé B étant R'Si(OR)₃ et R' étant un groupe organique non hydrolysable.

5. Matériau de revêtement selon une des revendications 1 à 4, au moins un composé B étant de formule
CF₃[OFC(CF₃)CF₂]_{d}(OCF₂)eOCONHCH₂CH₂CH₂Si(OR)₃ (d et e ≥ 0, de préférence d = 1 - 10)

6. Matériau de revêtement selon une des revendications 1 à 5, la structure polyéther perfluoré contenant 6 - 100 atomes de fluor.

7. Matériau de revêtement selon une des revendications 1 à 6, le rapport molaire des groupes R/R' se situant entre 0,1/100 et 100/0,1.

8. Matériau de revêtement selon une des revendications 1 à 7, au moins un composé A étant de formule Si(OR")₄, et R" étant un alkyle C₁-C₅.

9. Matériau de revêtement selon une des revendications 1 à 7, au moins un composé A étant du RSi(OR")₃, R étant un groupe organique non hydrolysable, et R" étant un alkyle C₁-C₅.

10. Matériau selon une des revendications 1 à 9, le matériau contenant également des particules de SiO₂.

11. Matériau de revêtement selon une des revendications 1 à 10, présentant une valeur en huile ≥ 3.

12. Matériau de revêtement selon une des revendications 1 à 10, présentant une valeur en huile ≥ 5.

13. Matériau de revêtement selon une des revendications 1 à 10, présentant une valeur en huile ≥ 7.

14. Procédé de fabrication d'un matériau de revêtement selon une des revendications précédentes 1 à 13, les composés A et B étant mélangés et hydrolysés.

15. Procédé selon la revendication 14, les composés A et B étant mélangés avec de l'eau.

16. Procédé selon la revendication 15; la quantité d'eau à ajouter étant > 0,5 mole par mole des groupes Z.

17. Procédé selon les revendications 14 à 16, des acides ou des bases étant ajoutés.

18. Procédé selon la revendication 17, la concentration des acides ou des bases étant > 0,1 mmol par litre du mélange.

19. Procédé selon les revendications 14 à 18, des particules d'oxyde métallique étant ajoutées.

20. Procédé selon la revendication 19, les particules d'oxyde métalliques étant une solution colloïdale de silice (kieselsol).

21. Matériau revêtu comprenant : un polymère poreux et un matériau de revêtement appliqué sur au moins une surface du polymère poreux, comprenant des condensats
d'au moins un composé A de la formule générale RₐMZ_{b} (a = 0 - 3 ; b =1- 4 ; a + b = 3, 4), dans laquelle R est un groupe organique non hydrolysable,
d'au moins un composé B de la formule générale R'ₓMZ_{y} (x = 1 - 3 ; y = 1 - 3 ; x + y = 3, 4), dans laquelle R' est un groupe organique non hydrolysable et au moins un R' contient une structure polyéther perfluoré séparée de M par au moins deux atomes,
M étant un élément du système périodique sélectionné dans les groupes principaux III-V ou dans les sous-groupes II-IV,
et au moins un R n'étant pas égal à au moins un R'.

22. Matériau revêtu comprenant : un substrat et un matériau de revêtement appliqué sur au moins une surface du substrat selon une des revendications 1 à 13.

23. Matériau revêtu selon la revendication 22, le substrat étant un polymère poreux.

24. Matériau revêtu selon une des revendications 21 ou 23, le polymère étant sélectionné dans un groupe constitué d'au moins un fluoropolymère.

25. Matériau de revêtement selon la revendication 24, le polymère étant du polytétrafluoroéthylène expansé (ePTFE).

26. Matériau revêtu selon une des revendications 21 à 25, le substrat ou le polymère poreux étant présent sous la forme d'une membrane, d'une garniture d'étanchéité ou d'une surface textile.

27. Matériau revêtu selon une des revendications 21 à 25, le substrat ou le polymère poreux étant présent sous la forme d'un laminé consistant en au moins une couche constituée d'une membrane et au moins une couche constituée d'une surface textile.

28. Matériau revêtu selon une des revendications 21 à 26, le substrat ou le polymère poreux étant une membrane et étant lié à une surface textile.

29. Matériau revêtu selon une des revendications 21 à 28, présentant une valeur en huile ≥ 3.

30. Matériau revêtu selon une des revendications 21 à 28, présentant une valeur en huile ≥ 5.

31. Matériau revêtu selon une des revendications 21 à 28, présentant une valeur en huile ≥ 7.

32. Matériau revêtu selon une des revendications 21 à 31, la valeur en huile du substrat ou du polymère poreux revêtu restant inchangée après traitement thermique à 160° C pendant 12 heures.

33. Matériau revêtu selon une des revendications 21 à 31, la valeur en huile du substrat ou du polymère poreux revêtu restant inchangée après traitement thermique à 200° C pendant 2 heures.

34. Matériau revêtu selon une des revendications 21 à 31, la valeur en huile du substrat ou du polymère poreux revêtu restant inchangée après traitement thermique à 250° C pendant 2 heures.

35. Matériau revêtu selon une des revendications 21 à 34, l'angle de contact d'une goutte d'huile pour transmission (huile ATF) sur le revêtement étant > 10° après traitement thermique à 160° C pendant 12 heures.

36. Procédé de revêtement d'un substrat, un matériau de revêtement selon une des revendications 1 à 13 étant appliqué sur le substrat et durci.

37. Procédé de revêtement d'un polymère poreux, un matériau de revêtement selon la revendication 21 ou selon une des revendications 1 à 13 étant appliqué sur le polymère poreux et durci

38. Procédé selon une des revendications 36 ou 37, le revêtement étant durci par traitement thermique.

39. Procédé selon une des revendications 36 ou 37, le revêtement étant durci pendant 0,1 à 60 minutes entre 50° C et 250° C, de préférence entre 120° C et 180° C.

40. Utilisation d'un matériau revêtu selon une des revendications 21 à 35 comme milieu de filtrage.

41. Utilisation du matériau revêtu selon une des revendications 21 à 35 comme élément d'aération et de désaération.

42. Elément d'aération et de désaération **caractérisé en ce qu'**il comprend un matériau revêtu selon une des revendications 21 à 35.

43. Elément d'aération et de désaération selon la revendication 42, **caractérisé en ce qu'**il présente un cadre qui est pourvu d'au moins une ouverture d'entrée et/ou de sortie de l'air, et **en ce que** l'ouverture d'entrée et/ou de sortie de l'air est recouverte du matériau revêtu.

44. Elément d'aération et de désaération selon la revendication 43, **caractérisé en ce que** le matériau revêtu est collé au cadre.

45. Elément d'aération et de désaération selon une des revendications 43 ou 44, **caractérisé en ce que** le cadre présente la forme d'une vis comportant un perçage traversant axial, le perçage traversant étant entièrement recouvert du matériau revêtu dans la zone de la tête de la vis.
